# EUROPEAN PATENT APPLICATION

(11) **EP 2 199 179 A1**
(43) Date of publication of application: **23.06.2010**
(21) Application number: 08172577.2
(22) Date of filing: 22.12.2008
(51) Int. Cl.: B62B 5/00, B62B 3/16, B62B 3/10, B65D 19/42, B65G 7/02

(54) **Wheel carrier for carrying a pallet**

(71) Applicant: AS Kleinsmed & Montage, 1169 Copenhagen (DK)
(72) Inventor: Sørensen, Allan, 1169, Copenhagen (DK)
(74) Representative: Holme Patent A/S

(57) **Abstract**

A wheel carrier (13) is adapted for carrying a pallet (1). The wheel carrier (13) comprises a channel-formed beam (14) with a bottom (15) and two flanges (16) which each has an upwards extending lower part (17) merging into a horizontal extending upper part (18). A central part is cut out of each of the flanges (16) leaving a central section (19) of the upwards-extending lower part (17) and two end sections (20,21) of the horizontal extending upper part (18) of the flanges (16). The wheels (22) of the wheel carrier (13) are mounted on the end sections (21,22). The wheel carrier has a simple and inexpensive construction, which quickly and easily can be mounted onto a pallet by means of a solid and reliable connection allowing the wheel carrier continuously to operate the pallet with the highest degree of stability and security.

## Description

The invention relates to a wheel carrier for carrying a pallet. The wheel carrier comprises a channel-formed beam with a bottom and two flanges. Each of the flanges is furthermore formed with an upwards-extending lower part merging into a horizontal extending upper part. A central section is cut out of each of the flanges leaving two end sections of each of the horizontal extending upper part of the flanges. The wheels of the wheel carrier are mounted on said end sections.

The invention also relates to a method for placing a pallet on the wheel carrier by means of a lift truck.

Pallets are among other things used for transporting of goods from one location to another. The transportation can take place by ships, railway, trucks or the like.

A popular pallet is an EUR pallet comprising a rectangular top framework with a corner block at each corner and a central block between each of two corner blocks whereby free openings are leaved in the sides of the pallet. The top framework of the pallet moreover is formed of a number of upper boards and lower board traversing the upper boards.

On a location are loaded or unloaded pallets transported from one place to another by means of a hand or engine operated lift truck with a fork which via the free openings in the sides of the pallet is engaging the under side of the top framework. The transportation then takes place in the raised position of the fork. The pallet is, on the destination, set down again by lowering the fork after which the fork is retracted.

This operation is laborious and time wasting and therefore costly, especially when a number of pallets need to be transported at about the same time since more expensive lifting trucks then will be required.

Another draw back consists in the fact that many lift trucks take up a great deal of the space on a location with the serious disadvantage that this space cannot be utilized for other purposes which frequently can be important.

During the years attempts have been made to solve the above-mentioned problems by providing the pallets with wheels for thereby being able directly to drive the pallet so that lift trucks are not required.

From the documents DE 10 2004 002 740 A1 thus is known a plate formed supporting device which is equipped with wheels and is arranged for being placed beneath each of the end parts of the top framework of a pallet. At the start the device is placed in a sloping position with an edge area under an end part of the top framework of the pallet. Afterwards the device is tilted back for placing the wheels upon the under side of the framework of the pallet.

A similar device is known from the document JP 20060172966 20060622.

Mounting and demounting the devices of those documents requires however strenuous manual work and is beside troublesome and difficult to carry out. Demounting of the devices could even be dangerous, especially when the pallet is heavy loaded. The connection between the pallet and the devices moreover are insecure and unstable.

The above-mentioned disadvantages of the prior art wheel carriers for carrying a pallet are according to the invention remedied by,
in a first aspect of the present invention providing a wheel carrier of the type mentioned in the opening paragraph which has a simple and inexpensive construction,
in a second aspect of the present invention providing a wheel carrier of the type mentioned in the opening paragraph which continuously can be operated with the required stability and security,
in a third aspect of the present invention providing a wheel carrier of the type mentioned in the opening paragraph which solid and reliable can be connected to a pallet,
in a fourth aspect of the present invention providing a wheel carrier of the type mentioned in the opening paragraph which quickly and easily can be mounted to and demounted from a pallet,
in a fifth aspect of the present invention providing a wheel carrier of the type mentioned in the opening paragraph which safely can be mounted to and demounted from a pallet, and
in a sixth aspect of the present invention providing a method of mounting and demounting the connection between a pallet and a wheel carrier of the type mentioned in the opening paragraph.

The novel and unique features of the invention consists in the fact that the wheel carrier comprises a channel-formed beam with a bottom and two flanges which each has an upwards extending lower part merging into a horizontal extending upper part. A central part is moreover cut out of the flanges leaving a central section of the upwards-extending lower part and two end sections of the horizontal extending upper part of the flanges whereby the wheels are mounted on said end sections.

Thereby is advantageously obtained an improved wheel carrier with a simple and inexpensive construction, which quickly and easily can be mounted onto a pallet by means of a solid and reliable connection allowing the wheel carrier continuously to carry the pallet with the highest degree of stability and security and which likewise quickly and easily can be demounted from the pallet.

The construction of a pallet typically comprises a rectangular top framework with a corner block at each corner and a central block between each of two corner blocks. Free openings are leaved in the sides of the pallet between corner - and central blocks.

According to the invention can the wheel carrier moreover be arranged in such a way that the space between the beam of the wheel carrier and the top framework of a pallet resting on the wheel carrier is large enough to accommodate the fork of a hand - or engine operated lift truck.

That feature implies advantageously that such lifting truck can be utilized for placing a pallet upon the wheel carrier or for lifting a pallet resting on the wheel carrier.

For making it possible for the wheel carrier of the invention to carry the pallet in a stable and secure way can the wheel carrier furthermore be arranged in such a way that the beam of the wheel carrier can accommodate a central block of a pallet resting upon the wheel carrier.

The invention will be explained in greater details below, giving further advantageous features and technical effects and describing exemplary embodiments with reference to the drawing, in which
Fig. 1 shows a pallet to be carried by the wheel carrier according to the invention, seen from above,
Fig. 2 shows the same, seen from the long the side of the pallet,
Fig. 3 shows the same seen from the short side of the pallet
Fig. 4 shows, in a larger scale, the wheel carrier according to the invention seen from above,
Fig. 5 shows the same, seen from the side,
Fig. 6 shows the same seen from the end,
Fig. 7 shows, partly in section, the pallet shown in fig. 1-3, seen from the long the side of the pallet, lifted by means of the fork of a lift truck, and the wheel carrier shown in fig. 5 and 6, seen from the end, placed below the pallet and said fork,
Fig. 8 shows the same in lowered position,
Fig. 9 shows the pallet shown in fig. 1 - 3, seen from the long the side of the pallet, carried by the wheel carrier shown in fig. 5 and 6, seen from the long side, and
Fig. 10 shows the pallet shown in fig. 1 - 3, seen from the short side, carried by the wheel carrier shown in fig. 5 and 6, seen from the end.

The wheel carrier according to the invention is well suited to carry different kinds of pallets.

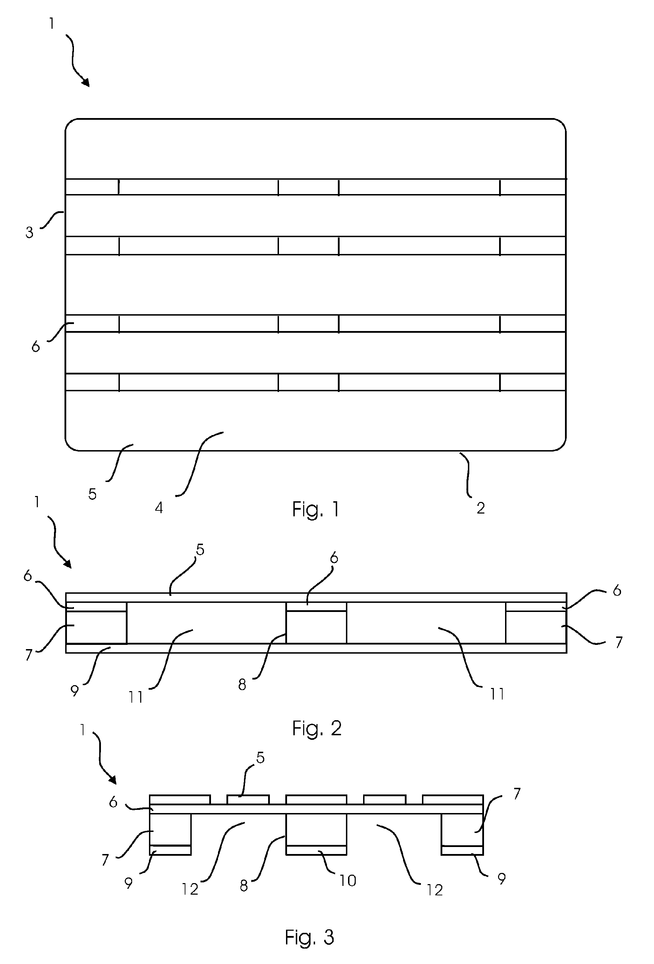

In fig. 1, 2 and 3 is by way of example shown an EUR pallet 1 with a long side 2 having a length of 1200 mm and a short side 3 having a length of 800 mm.

The top framework 4 of the EUR pallet consists of five long boards 5 and three short boards 6 extending crosswise beneath the long boards.

As seen in fig. 2 and 3 is a corner block 7 at each corner and a central block 8 between each of two corner blocks 7 moreover attached to the under side of the top framework. A board 9, extending along the long side of the pallet, is connecting the corner blocks and a similar board 10 is connecting the central boards.

Between the corner blocks and the central block on the long side 2 of the pallet is leaved a free opening 11 at each side of the central block and between the corner blocks and the central block on the short side 3 of the pallet is leaved a free opening 12 at each side of the central block.

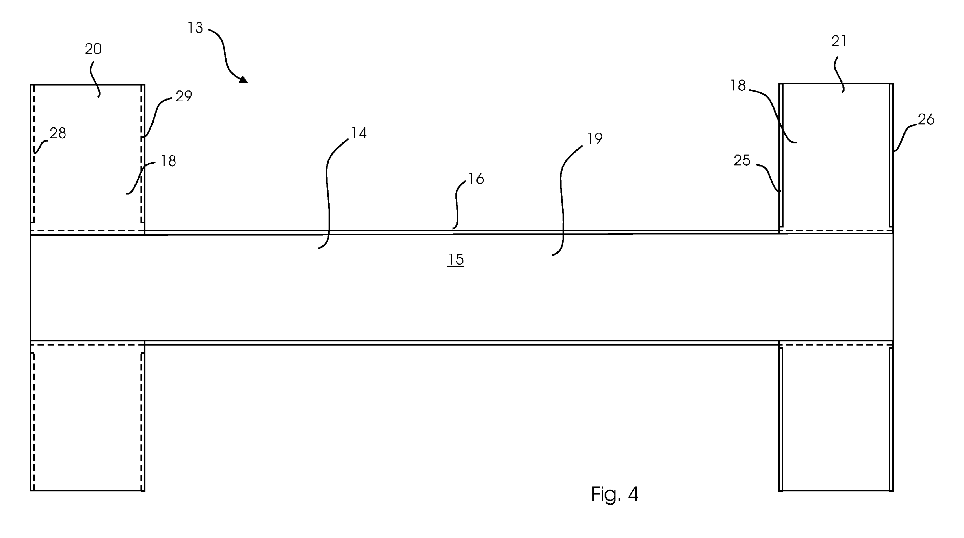

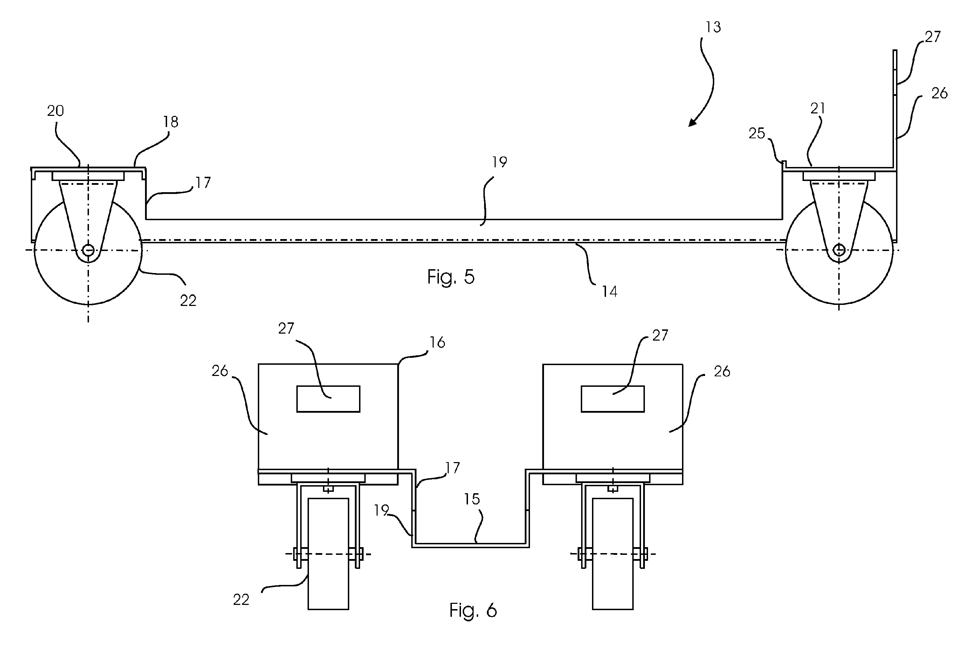

The wheel carrier 13 shown in fig. 4, 5 and 6 comprises a channel-formed beam 14 with a bottom 15 and a flange 16 on each side of the bottom.

The cross section of the beam has in this case a shape as an U. Other shapes are however possible. The beam thus can have a shape as a V in which case it is possible to stack carriers with and without wheels. Carriers with wheels can be stacked by being offset at least the width of a wheel in relation to each other.

Each of the flanges 16 has an upwards-extending lower part 17 merging into a horizontal extending upper part 18.

A central part is cut out of each of the flanges leaving a central section 19 of the upwards-extending lower part 17 and two end sections 20 and 21 of each of the horizontal extending upper part of the flanges. The wheels are mounted upon the under side of said end sections 20 and 21.

Fig, 7 and 8 shows the way in which the pallet is being placed upon the wheel carrier.

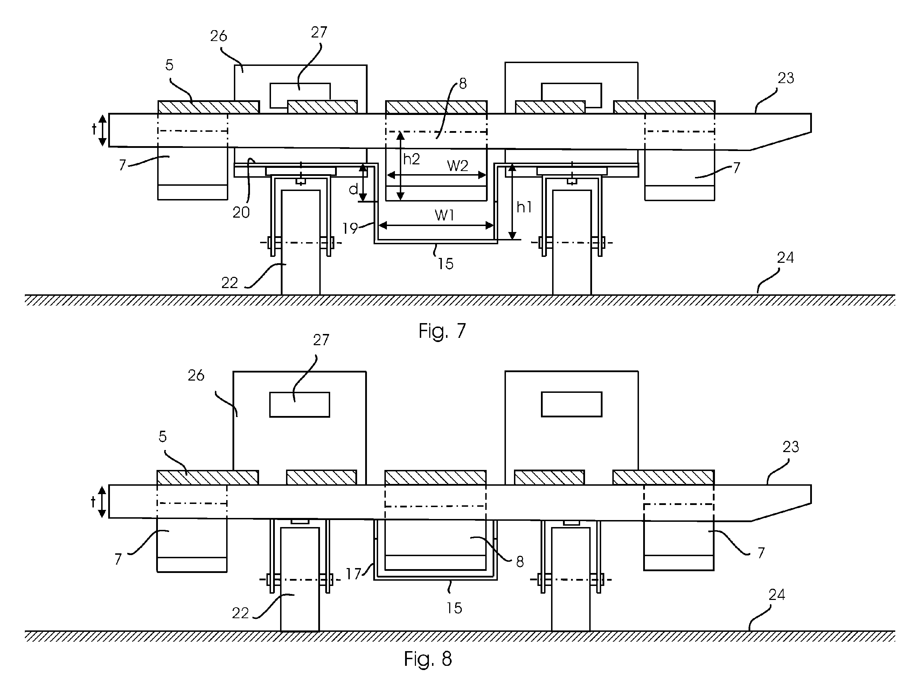

In fig. 7 has a fork 23 of a lift truck (not seen) been led underneath the top framework of a pallet through the free openings 11 in the long side 2 of the pallet. The lift truck (not seen) then has lifted the fork with the pallet to a height sufficiently large to allowing the wheel carrier to pass under the fork through the free openings 12 in the short side 3 of the pallet during which the wheel carrier is driving on the ground 24.

The distance d between the central section 19 and the end sections 20 and 21 of the flanges of the beam is, according to the invention, larger than the vertical thickness t of the fork.

That proportion advantageously implies, that the fork can be lowered until the top framework 4 of the pallet is resting upon the end sections 20 and 21 of the flanges 16 of the wheel carrier 13. This situation is shown in fig. 8. The fork now can be retracted.

The width W1 of the bottom 15 of the beam 14 is, according to the invention, moreover larger than the width W2 of the respective central block 8 of the pallet, while the height h1 of the upwards-extending lower part 17 of the flanges of the wheel carrier is larger than the height h2 of the central block 8.

These proportions advantageously imply that the central block is not able to be an obstacle for lowering the pallet sufficiently for allowing the framework of the pallet to rest upon the end sections 20 and 21 of the flanges 16 of the wheel carrier 13.

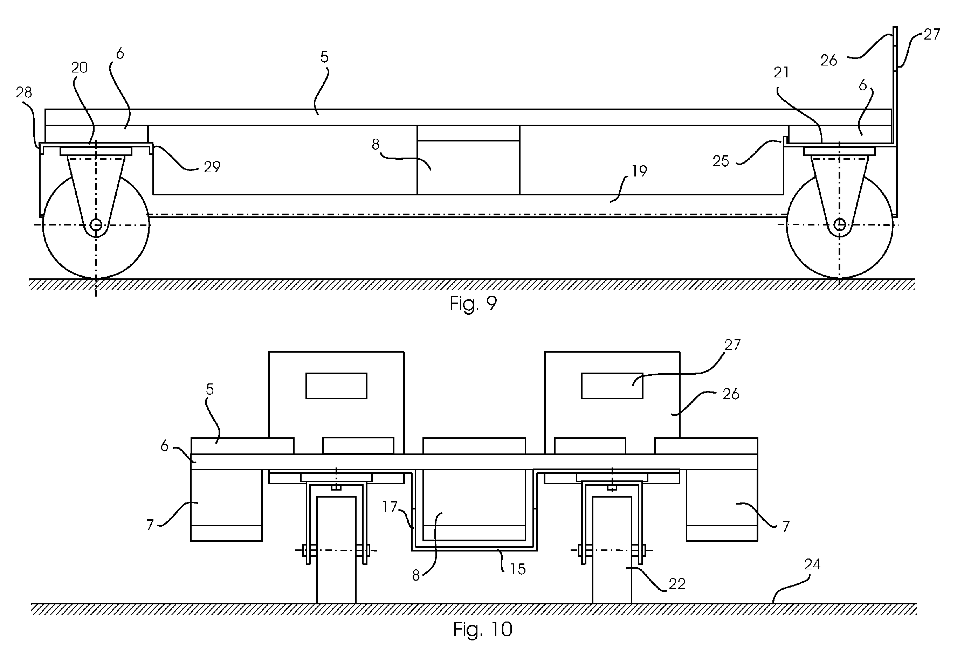

In fig. 9 and 10 has the fork now been retracted from the pallet which now advantageously can bee moved from one place to another without using a lift truck, likes e.g. a hand or engine operated lift truck.

As best seen in fig. 10 is the central block 8 placed inside the channel-formed beam while the end sections 20 and 21 of the upper part of the flange are placed between the corner blocks and the central blocks on the short side of the panel.

The pallet is moved from one place to another by pulling or pushing the pallet. In this connection it is important that forces acting upon the pallet or the wheel carrier safely can be transmitted between the two constructions for thereby preventing the wheel carrier to be displaced in relation to the pallet.

As seen in 5 - 10 is the end section 21 with this end in view equipped with two opposite upright flaps 25 and 26 for engaging both sides of a short cross board 6 of the pallet.

The uttermost of the two upright flaps 26 is so high that it can function as a handle to be used for pulling or pushing the carrier.

An opening 27 is furthermore formed in the handle for in use being engaged of a hand or a tool with a hook or the like.

The end section 20 of the wheel carrier can likewise be equipped with two opposite flaps 28 and 29. The flaps can be upright but are in this case turning downwards.

In fig. 7 has a fork 23 of a lift truck (not seen) been led underneath the pallet trough the free openings 11 in the long side 2 of the pallet after which the pallet has been lifted to a height allowing the wheel carrier to be passed underneath the fork through the free openings 12 in the short side 3 of the pallet by driving on the ground 24 by means of the wheels 22.

The steps utilized for placing a pallet on the wheel carrier of the invention is above mentioned in that order that the pallet at first is lifted by means of a lifting truck after which the wheel carrier is run in under the fork with the framework of the pallet and the fork then is retracted

Alternatively can the lifting truck within the scope of the invention at first lift the pallet and then set it down upon a stopped wheel carrier after which the fork is retracted.

The construction of the wheel carrier also allow e.g. a fork-lift truck to lift off a pallet already placed on the wheel carrier for placing the pallet in some other place, which e.g. could be a rack.

Said fork-lift truck also could lift off a pallet from e.g. a rack and place it on the wheel carrier by means of which the pallet then can be displaced to some other place.

The wheel carrier of the invention is well suited to support and move loaded pallets since the pallet is resting on the end sections 20 and 21 of the wheel carrier and the wheels are mounted on these sections so that the weight of the load advantageously is transmitted vertically from the pallet to the ground via the wheels without thereby stressing the material of the wheel carrier.

## Claims

1. A wheel carrier (13) for carrying a pallet (1),
**characterized in**
**that** the wheel carrier (13) comprises,
- a channel-formed beam (14) with a bottom (15) and two flanges (16),
- **that** each of the flanges (16) has an upwards extending lower part (17) merging into a horizontal extending upper part (18),
- **that** a central part is cut out of each of the flanges (16) leaving a central section (19) of the upwards-extending lower part (17) and two end sections (20,21) of the horizontal extending upper part (18) of the flanges (16), and
- **that** the wheels (22) are mounted on the end sections (21,22).

2. A wheel carrier (13) according to claim 1, where the pallet (1) comprises a square or rectangular top framework (4) with a corner block (7) at each corner and a central block (8) between each of two corner blocks (7) leaving free openings (11,12) in between, **characterized in**
- **that** the width (W1) of the bottom (15) of the beam (14) is larger than the width (W2) of at least one of the central blocks (8), and
- **that** the height (h1) of the upwards-extending lower part (17) of the flanges (16) is larger than the height (h2) of the central block (8) of the pallet (1).

3. A wheel carrier (13) according to claim 2, **characterized in that** the under side of the top framework (4) of the pallet (1) is resting on the end sections (20,21) of the flanges (16) of the wheel carrier (13) in the carrying position of the wheel carrier (13).

4. A wheel carrier (13) according to claim 2 or 3, **characterized in that** the length of the carrier (13) corresponds with the length of a side (2,3) of the square or rectangular top framework (4) of the pallet (1).

5. A wheel carrier (13) according to claim 2, 3 or 4, **characterized in that** the width of the wheel carrier (13) is smaller than the distance between two corner blocks (7).

6. A wheel carrier (13) according to any of the claims 2 - 5, where the top framework (4) of the pallet (1) comprises a number of upper boards (5) and at least one lower board (6) traversing the upper boards (5), **characterized in that** at least one of the end sections (20,21) of the flanges (16) of the wheel carrier (13) is formed with an upright flap (25,26) at each side, and that the distance between the flaps (25,26) is larger than the width of said at least one lower board (6).

7. A wheel carrier (13) according to claim 6, **characterized in that** at least one of the opposite end sections (20,21) is formed with a downwards facing flap (28,29) at each side.

8. A wheel carrier (13) according to claim 7, **characterized in that** the uttermost (26) of the two upright flaps (25,26) is extending upwards on the outside of the top framework (4) to form a handle (26) for manipulating the wheel carrier (13).

9. A wheel carrier (13) according to claim 8, **characterized in that** an opening (27) is formed in the handle (26) for in use being engaged of a hand or a tool with a hook or the like.

10. A wheel carrier (13) according to any of the claims 1 - 9, **characterized in that** the distance (d) between the central section (19) and the end sections (20,21) of the flanges (16) of the beam (14) is larger than the vertical thickness (t) of a lifting fork (23) for lifting the pallet (1).

11. A wheel carrier (13) according to any of the claims 1 - 10, **characterized in that** the beam (14) is U-formed.

12. A wheel carrier (13) according to any of the claims 1 - 10, **characterized in that** the beam (14) is V-formed.

13. A method for placing a pallet (1) on the wheel carrier (13) of claim 1 - 12, **characterized in that** the method comprises the following steps,
- providing a lift truck with a lifting fork (23),
- leading the lifting fork (23) underneath the top framework (4) of the pallet (1) via the free openings (11) in one side (2) of the pallet (1),
- lifting the pallet (1) by means of the fork (23) to a level where the wheel carrier (13) is allowed to pass underneath the fork (23),
- driving the carrier (13) underneath the fork (23) via the free openings (12) in another side (3) of the pallet (1) perpendicular to the first one,
- lowering the lifting fork (23) until the underside of the top framework (4) is resting on the end sections (20,21) of the flanges (16) of the wheel carrier (13), and
- retracting the lifting fork (23).

14. A method of claim 13, **characterized in that** the lifting fork (23) in lifting position is extending through the free openings (11) on two opposite sides (2) of the pallet (1).

15. A method of claim 13 or 14, **characterized in that** the lifting fork being in lifting position is extending through the free openings (11) on the longest sides (2) of the pallet (1).
